# EUROPEAN PATENT APPLICATION

(11) **EP 2 671 486 A1**
(43) Date of publication of application: **11.12.2013**
(21) Application number: 12172170.8
(22) Date of filing: 15.06.2012
(51) Int. Cl.: A47J 43/25

(54) **Flip grater**

(30) Priority: 04.06.2012 US 201213487889
(71) Applicant: Progressive International Corporation, Kent, WA 98032 (US)
(72) Inventor: Kent, Joseph, Seattle, Washington 98112 (US)
(74) Representative: Carter, Stephen John

(57) **Abstract**

A food grater includes a handle (10) and one or more pivoting grating surfaces (30) that can be stowed within the handle or pivoted outward for use. The pivoting or otherwise retractable nature of the grating surface allows for more compact storage and also provides a handy cover for the grating surface for enhanced safety during storage or transit

## Description

### FIELD OF THE INVENTION

This invention generally relates to food graters, particularly including graters having multiple grating surfaces.

### BACKGROUND OF THE INVENTION

Food graters are ubiquitous and very useful items in a typical kitchen. One problem with graters is that the exposed grating surfaces are very sharp, making storage and handling of the grater somewhat dangerous. The combination of bulk and exposed sharp blades also makes it especially inconvenient to try to transport a grater, for example on a picnic.

### SUMMARY OF THE INVENTION

A preferred food grater as illustrated and described below includes a handle and one or more pivoting grater blades that can be stowed within the handle or pivoted outward for use. The pivoting or otherwise retractable nature of the blade allows for more compact storage and also provides a handy cover for the blade for enhanced safety during storage or transit.

In some versions of the invention, the grater includes multiple pivoting blades, each of which may be stored or extended for use.

### BRIEF DESCRIPTION OF THE DRAWINGS

Preferred and alternative examples of the present invention are described in detail below with reference to the following drawings:

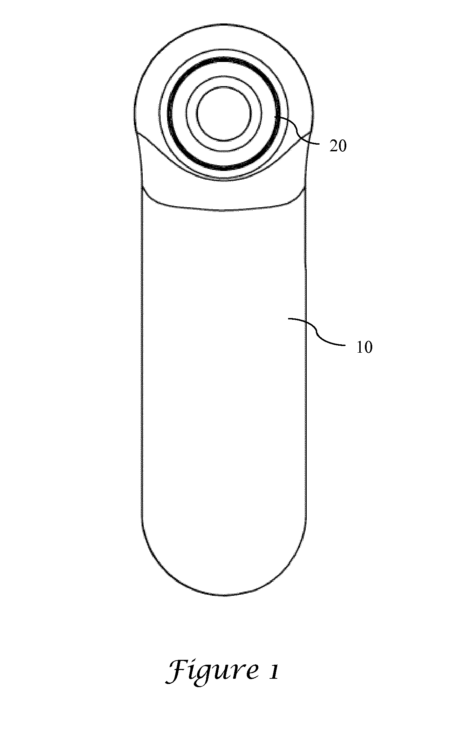

Figure 1 is a top view of a preferred food grater, shown with the grating surface in a stowed position.

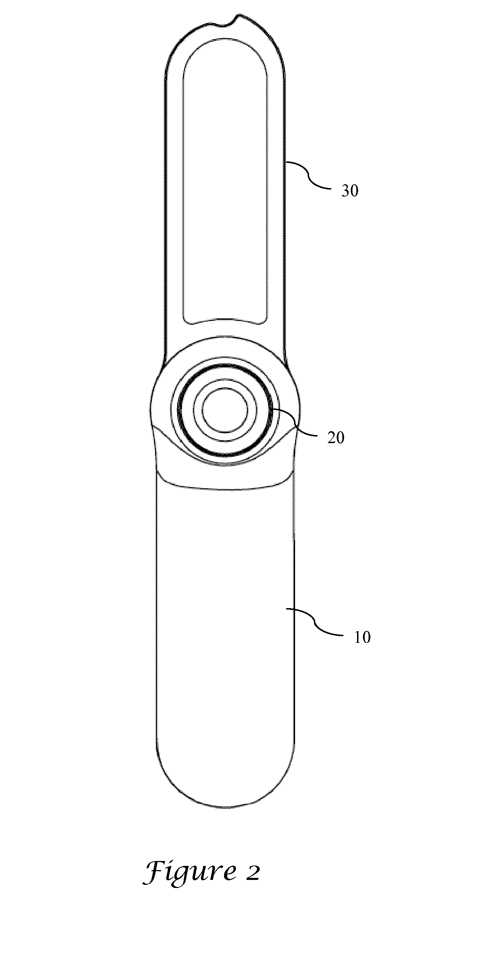

Figure 2 is a top view of a preferred food grater, shown with the grating surface in a deployed position.

Figure 3 is a side view of a preferred food grater, shown with the grating surface in a deployed position.

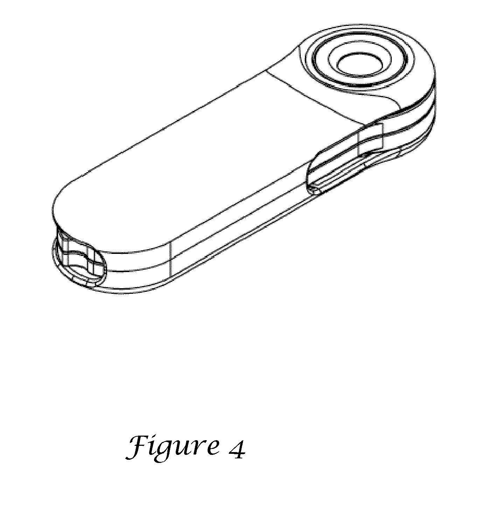

Figure 4 is a perspective view of a preferred food grater.

Figure 5 is an exploded view of a preferred food grater.

Figure 6 is a top view of a pair of preferred food grating surfaces.

### DETAILED DESCRIPTION OF THE PREFERRED EMBODIMENT

A preferred version of the grater includes a handle 10 having a grating body or grating surface 30 supported on the handle at a pivot 20. As described more fully below, the grating surface is pivotally movable between a stowed position in which it is stored within the handle and an extended or deployed position in which it is rotated away from the handle to expose the grating surfaces for use.

Although the pivoting version as illustrated below is the preferred implementation, in other versions the grating surface may slide linearly within the handle so that it retracts and extends generally along an axis formed by the handle rather than pivoting along a pivot point at a distal end of the handle. In addition, although the handle is preferably formed such that the grating surface is received between two handle halves in the retracted position, in some versions the handle may be formed with only one half such that in the retracted position the handle is adjacent only the sharpened-edge side of the grating surface.

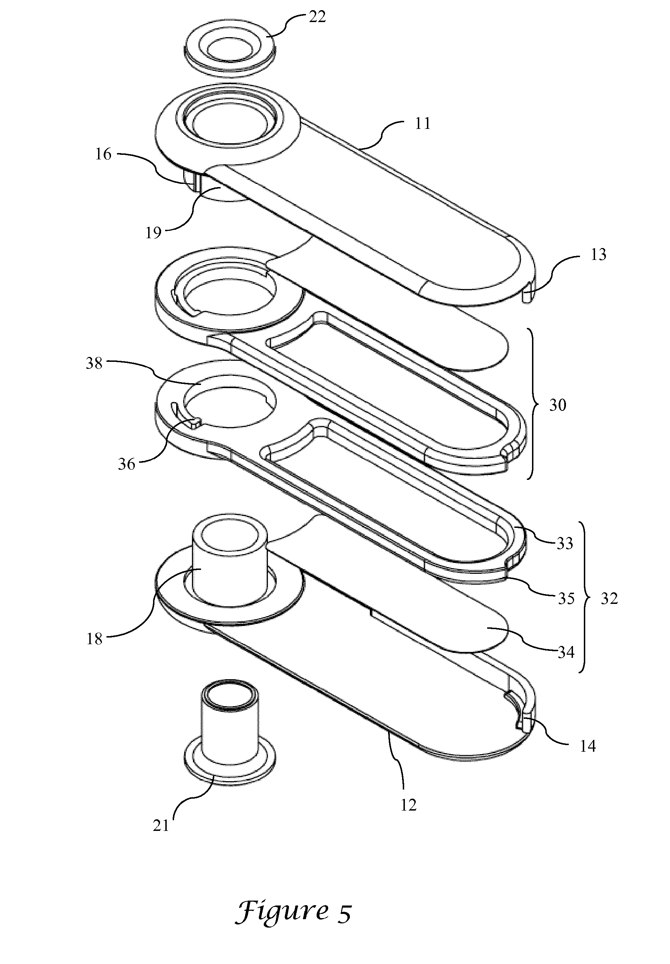

In the preferred version, as best seen in the exploded view of Figure 5, the handle is formed with a first side portion 11 and a second side portion 12. Either or both of the handle portions may be formed with mating cylindrical sleeves 18, 19 such that one sleeve is received within the other. The sleeves need not be internally cylindrical, and most preferably only the outermost surface of the combined mating cylindrical sleeves incorporates a cylindrical surface to allow for pivoting motion of the blades about the cylinders.

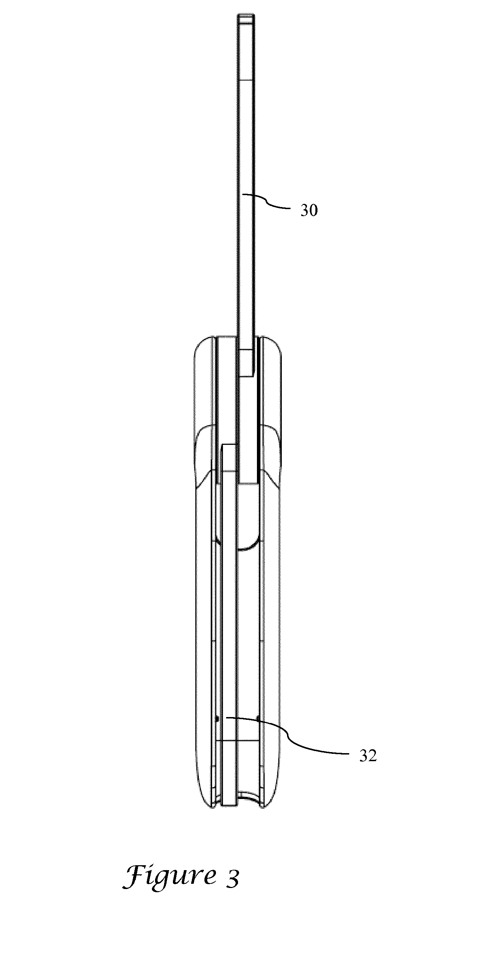

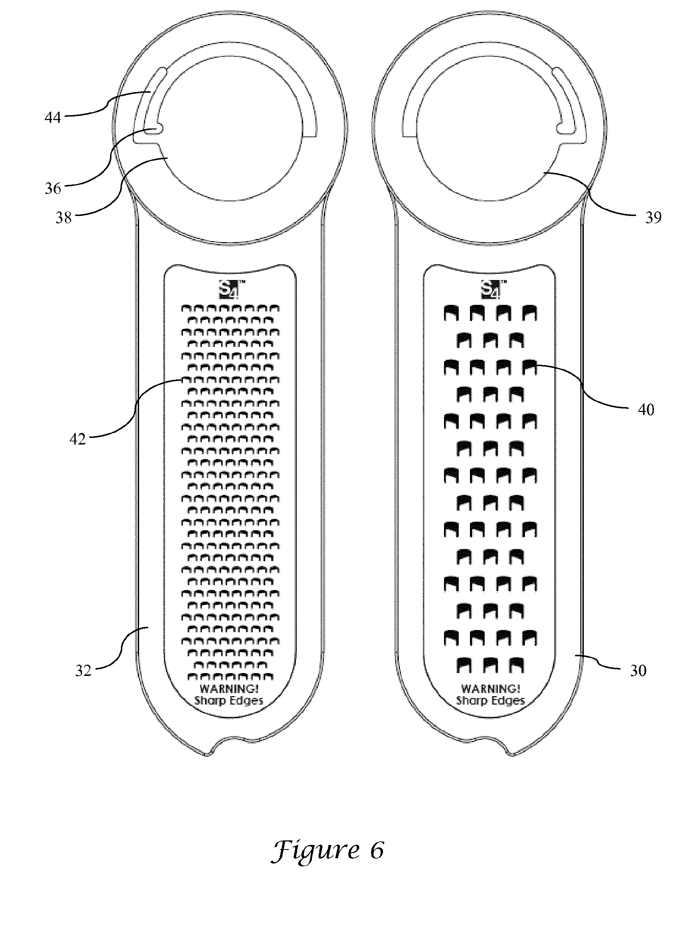

One or more grating surfaces is carried on the handle cylinder for pivotal motion about the cylinder. In the version as shown in Figure 3, two grating surfaces 30, 32, are provided. Exemplary grating surfaces are also illustrated in Figure 6, in which each of the grating surfaces 30, 32 includes a substantially circular opening 38, 39 that is sized to receive the handle cylinder to allow the blades to pivot about the cylinder.

The handle halves and internal grating blades are sandwiched together and retained by a fastener 21, 22, which may be in the form of a rivet and cap, a nut and bolt, or other such fastener. In the preferred version, the fastener includes a male portion 21 having a shaft that extends through the mating sleeves 18, 19 forming the handle cylinder, with an end cap 22 joined to the male portion to securely fasten the grater together.

The preferred first handle portion 12 includes a generally planar handle body having an internal mating sleeve 18 formed at one end. The planar body has an integrally formed first sidewall 14 along most of one side of the planar handle body, terminating at a distal end of the handle opposite the sleeve 18.

The second handle portion 11 is primarily a mirror image of the first handle portion. Thus, it includes a generally planar body having an external mating sleeve 19 at one end. In the second handle portion, the external mating sleeve 19 is somewhat larger than the internal sleeve 18 of the first handle portion so that the internal sleeve can be received within the external sleeve. The second handle portion further includes a second sidewall 13 formed on one side of the planar body so that the first and second sidewalls 13, 14 are adjacent one another and are of the same length when the handle portions are joined together. When the handle portions are joined together, they form an opening in the region opposite the sidewall such that the grating surfaces may be pivoted into and out of the handle through the opening.

The grating surfaces 30, 32 are preferably formed with a grater frame 33 supporting a grater plate 34. Most preferably, the grater plate is formed from stainless steel and the frame is formed from a plastic material. In other versions, however, the grater frame and plate are integrally formed from plastic, metal, or other materials.

At one end, the grater frame is formed with an opening 38 sized to snugly receive the external sleeve 19 for pivotal movement of the frame 33 about the cylindrical sleeve.

The frame may further include a detail to retain the grater frame in an open and closed position for use and for storage. As illustrated, the frame includes a pawl 36 formed along the interior circumference of the opening 38, with a channel 44 adjacent the pawl to allow the pawl to move radially inward and outward. The pawl engages a notch 16 formed on the external sleeve cylinder 19. When the pawl is positioned within the notch, the grater frame resists pivotal movement. Upon application of a sufficient rotational force, however, the pawl will flex radially outward from the notch (thereby closing the gap formed by the channel) to separate the pawl from the notch and allow pivotal movement of the frame. A second notch (not shown) may be formed on the external sleeve cylinder approximately 180 degrees opposite the first notch to provide a similar locking function when the frame is positioned in the deployed, open position.

At the distal end of the frame 33, opposite the end forming the opening 38, the frame may include a finger 35 that projects outwardly and away from the distal end of the frame. The finger projection forms a shoulder to allow better gripping of the frame for rotational movement to open and close the grater.

In the version as illustrated, two grating surfaces 30, 32 are provided. In other versions, however, only a single grating surface may be incorporated, or more than two grating surfaces may be secured within the handle.

The grating surfaces will preferably have grating plates with different cutting surfaces. Thus, for example, a first grating surface may have a grating plate with relatively larger teeth 40 and corresponding openings while a second grating surface may have a grating plate with relatively smaller teeth 42 and corresponding openings. Yet other grating plates may have slicing or zesting surfaces, as desired.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A grater, comprising:
a handle; and
a first grating surface having a first cutting surface, the first grating surface being
attached to the handle for movement between a stowed position in which the handle covers the first cutting surface, and a deployed position in which the first cutting surface is exposed for use in grating a food item.

2. The grater of claim 1, wherein the first grating surface is pivotally attached to the handle.

3. The grater of claim 2, wherein the handle comprises a first handle portion and a second handle portion, the first handle portion and the second handle portion being joined to define an interior space, wherein the first grating surface is received within the interior space in the stowed position.

4. The grater of claim 3, further comprising a second grating surface having a second cutting surface, the second grating surface being attached to the handle for movement between a stowed position in which the handle covers the second cutting surface, and a deployed position in which the second cutting surface is exposed for use in grating the food item.

5. The grater of claim 3, wherein the handle further comprises a cylindrical sleeve and the first grating surface comprises a cylindrical opening, the sleeve being received within the cylindrical opening to pitoally attach the first grating surface to the handle.

6. The grater of claim 5, wherein the cylindrical opening further comprises an internal pawl and the cylindrical sleeve comprises a groove, the pawl being received within the groove when the first grating surface is in the deployed position.

7. The grater of claim 6, further comprising a channel formed adjacent the pawl, whereby the pawl is radially movable within the cylindrical opening.

8. The grater of claim 3, wherein the first cutting surface comprises a plurality of teeth extending away from a plane defined by the first grating surface, the plurality of teeth being adjacent a plurality of through-holes formed in the first grating surface, whereby when the food item is grated by the first grating surface portions of the food item pass through the through-holes.

9. The grater of claim 3, wherein the first grating surface comprises a peripheral frame and an interior grating plate supported by the peripheral frame.

10. The grater of claim 3, further comprising a means for locking the first grating surface in the deployed position.

11. A grater, comprising:
a handle; and
a first grating body having a first cutting surface, the first grating body being attached to
the handle for movement between a stowed position in which the first cutting surface is covered by the handle and a deployed position in which the first cutting surface is exposed and extending away from the handle.

12. The grater of claim 11, wherein the first grating body is pivotally attached to the handle.

13. The grater of claim 11, wherein the handle comprises a first handle portion and a second handle portion, the first handle portion and the second handle portion being joined to define an interior space, wherein the first grating surface is received within the interior space in the stowed position.

14. The grater of claim 11, further comprising a second grating body having a second cutting surface, the second grating body being pivotally attached to the handle.

15. The grater of claim 14, wherein the first cutting surface comprises a first plurality of cutting teeth and adjacent through-holes and the second cutting surface comprises a second plurality of teeth and adjacent through-holes, the first plurality of cutting teeth being larger than the second plurality of teeth.

16. The grater of claim 14, wherein the first cutting surface is planar.

17. The grater of claim 11, wherein the first grating body comprises a peripheral frame and an interior grating plate supported by the peripheral frame.

18. The grater of claim 11, further comprising a means for locking the first grating body in the deployed position.
